# NEW EUROPEAN PATENT SPECIFICATION

(11) **EP 2 794 263 B2**
(45) Date of publication and mention of the opposition decision: **28.12.2022**
(45) Mention of the grant of the patent: 19.02.2020
(21) Application number: 12743001.5
(22) Date of filing: 17.07.2012
(51) Int. Cl.: B32B 15/08, B32B 15/085, B32B 27/32, G09F 3/10

(54) **PRESSURE-SENSITIVE LABEL STRUCTURES, AND METHODS OF MAKING SAME**
DRUCKEMPFINDLICHE ETIKETTENSTRUKTUREN UND HERSTELLUNGSVERFAHREN DAFÜR
STRUCTURES D'ÉTIQUETTES SENSIBLES À LA PRESSION, ET PROCÉDÉS DE FABRICATION ASSOCIÉS

(30) Priority: 07.09.2011 US 201161531764 P
(43) Date of publication of application: 29.10.2014
(73) Proprietor: Jindal Films Europe Virton SPRL, 6761 Virton (BE)
(72) Inventor: CAMPEAU, Anne P., Rochester, NY 14620 (US); LOCKHART, Mark W., 1150 Luxembourg (LU); MCGEE, Dennis E., Penfield, NY 14526 (US)
(74) Representative: Mai Besier
(86) International application number: PCT/US2012/047036
(87) International publication number: WO 2013/036324

(56) References cited:
- EP-A2- 1 361 168
- EP-A2- 1 361 168
- CA-A1- 2 440 663
- US-A- 4 522 887
- US-A- 4 522 887
- Rajen Patel ET AL: "Surface Haze and Surface Morphology of Blown Film Compositions", JOURNAL OF PLASTIC FILM AND SHEETING, vol. 21, no. 3, 1 July 2005 (2005-07-01), pages 217-231, XP055604517, US ISSN: 8756-0879, DOI: 10.1177/8756087905057247

## Description

### FIELD OF THE INVENTION

This invention relates generally to metallized pressure-sensitive label structure.

### BACKGROUND OF THE INVENTION

Recently polymeric films have been utilized to take the place of paper for product labels and the like. Synthetic film labels can be more robust and easier to process in automatic labeling machinery. A typical system employs a release layer which carries a label removable therefrom. The label has a pressure sensitive adhesive on one side and product identifying indicia or other information on the other. The release layer forms a substrate onto which the label adhesive will not aggressively adhere. The release characteristics of the substrate and the adhesive are such that when the substrate is bent through a certain angle, the stiffness of the label will cause it to separate from the release surface in spite of the presence of the adhesive. This permits a container or product to be interfaced with the adhesive layer so that the label will transfer from the release surface to the product to be labeled.

Polymeric films that provide a higher aesthetic appeal are generally desirable. Currently, polymeric film structures for use in pressure sensitive labels generally include a core layer film structure wherein the adhesive side contacts the release liner. The print side is the side opposite the adhesive side. Typically, metallized pressure-sensitive labels include the metal layer on the adhesive side of the core layer. In such structures, the intervening core and print-side coatings protect the fragile metal layer from damage. The increased protection comes at a loss in brilliance and reflectivity since the reflected light travels through the intervening layers, thereby reducing the aesthetic value of the label. Label structures that provide protection of the fragile metal layer without locating it on the adhesive side of the structure would therefore be useful.

EP-A-1361168 discloses a plastic film having an orientated polypropylene base film metallized on one side and provided with a cold adhesive on the other side. A printed layer is applied to the metallized side.

### SUMMARY OF THE INVENTION

### DETAILED DESCRIPTION OF EMBODIMENTS OF THE INVENTION

In another aspect, the invention provides a pressure-sensitive label structure as defined in claim 18. Optional features are the subject of claims 29 to 714. Embodiments of the invention provide pressure-sensitive label structures comprising: a) an oriented polymeric substrate having a print side and an adhesive side, wherein a print-print-side skin layer of the substrate has a surface roughness < 12.0 µm; b) a metal layer in surface contact with the print side of the polymeric substrate; c) a primer composition as defined in claim 1 in surface contact with the metal layer; d) a printable topcoat layer in surface contact with the primer composition; and e) a release liner structure removably secured to the adhesive side of the polymeric substrate by an adhesive composition.

In yet another aspect, the invention provides a method of making a pressure-sensitive label structure according to claim 1 multilayer polymer film as defined in claim 815. Optional features are the subject of claims 16 to 20. Embodiments of the invention provide methods of making pressure-sensitive label structuremultilayer polymer films. The methods comprise: a) providing an oriented polymeric substrate having a print side and an adhesive side, wherein a print-side skin layer of the substrate has a surface roughness < 12.0 um; b) forming a metal layer in surface contact with the print side of the polymeric substrate; c) providing a primer composition as defined therein in surface contact with the metal layer; and d) providing a printable topcoat layer in surface contact with the primer composition; the method further comprising a removable release liner structure on the adhesive side of the polymeric substrate.

Embodiments of the invention described herein are related to multilayer polymer films, particularly polymer films suitable for use in pressure-sensitive label structures. It has been found that such structures including a metal layer in surface contact with the print-side of a polymeric substrate can provide unproved aesthetic appeal (e.g., brilliance and/or reflectivity) while remaining durable when used with an appropriate primer composition and printable topcoat layer.

Various specific embodiments, versions, and examples are described herein, including exemplary embodiments and definitions that are adopted for purposes of understanding the claimed invention. While the following detailed description gives specific preferred embodiments, those skilled in the art will appreciate that these embodiments are exemplary only, and that the invention can be practiced in other ways.

As used herein, "polymer" may be used to refer to homopolymers, copolymers, interpolymers, terpolymers, etc.

As used herein, unless specified otherwise, the term "copolymer(s)" refers to polymers formed by the polymerization of at least two different monomers. For example, the term "copolymer" includes the copolymerization reaction product of ethylene and an alphaolefin (a-olefin), such as 1-hexene. However, the term "copolymer" is also inclusive of, for example, the copolymerization of a mixture of ethylene, propylene, 1-hexene, and 1-octene.

As used herein, unless specified otherwise, the term "terpolymer(s)" refers to polymers formed by the polymerization of at least three distinct monomers.

As used herein, unless specified otherwise, the term "elastomer" refers to a polymer with the property of elasticity.

As used herein, the term "propylene-based polymer" refers to a polymer comprising from 50.0 to < 97.5 wt% of polymer units derived from propylene monomer. The lower limit of polymer units derived from propylene, in particular, propylene-based polymers is 60.0 wt%, 65.0 wt%, 70.0 wt%, 75.0 wt%, 80.0 wt%, 85.0 wt%, 90.0 wt%, or 95.0 wt% of polymer units derived from propylene monomer. Preferably, the remainder of the polymer units are derived from at least one other monomer, particularly an α-olefin, e.g., ethylene.

As used herein the term "substantially free" of a particular material means that the referenced material is not purposely included, except as an impurity or as may be provided due to recycling of edge trimmings, as is common practice in the film-making industry. "Substantially free" may be defined as indicating that the material is present in an amount < 1.0wt%, ≤ 0.5wt%, ≤ 0.2wt%, or ≤ 0.1 wt%.

As used herein the term "mini-random propylene copolymer" refers to a polymer comprising 97.5 wt% to 99.5 wt% of polymer units derived from propylene monomer and 0.5 wt% to 2.5 wt% of polymer units derived from at least one other monomer, particularly an a-olefin, e.g., ethylene.

As used herein, weight percent ("wt%"), unless noted otherwise, means a percent by weight of a particular component based on the total weight of the mixture containing the component. For example, if a mixture or blend contains three grams of compound A and one gram of compound B, then the compound A comprises 75 wt% of the mixture and the compound B comprises 25 wt%.

In one aspect, embodiments of the invention provide pressure-sensitive label structuresmultilayer polymer films comprising: a) an oriented polymeric substrate having a print side and an adhesive side, wherein a print-side skin layer of the substrate has a surface roughness ≤ 12.0 µm; b) a metal layer in surface contact with the print side of the polymeric substrate; c) a primer composition as defined in claim 1 in surface contact with the metal layer; and d) a printable topcoat layer in surface contact with the primer composition; and a release liner structure removably secured to the adhesive side of the polymeric substrate by an adhesive composition.

### The Oriented Polymeric Substrate

The oriented polymeric substrate included in embodiments of the invention may comprise a single or multilayer oriented polymeric film, e.g., an oriented polypropylene film. The substrate has an adhesive side and a print side. In some embodiments, the oriented polymeric substrate includes a core layer in combination with one or more optional tie-layers located between the core and opposing surface layers. The layers of the oriented polymeric substrate can be, but need not necessarily be, coextruded.

In some embodiments, the core layer of the oriented multilayer film comprises one or more tie layers. When present, tie layers are placed at the exterior portion of the core layer to act as interface for contacting the first and/or second skin layer. For example, in one embodiment, the tie layers form the outer portions of the core layer such that the tie layers are from the region between an interior portion of the core layer and the first and/or second skin layers. The tie layers can comprise any polymer which holds together the two layers to be joined. While the tie layers are described as a portion of the core layer, one skilled in the art will appreciate that this description is a formality and tie layers may also be described as separate layers, formed by coextrusion, and may be the same or different composition as the interior portion of the core.

The core layer of the structures of the present invention comprises polypropylene, highly crystalline polypropylene, high density polyethylene, or blends thereof. In other embodiments, the core and optional tie layers of the oriented multilayer film may comprise a propylene polymer, ethylene polymer, isotactic polypropylene ("iPP"), high crystallinity polypropylene ("HCPP"), low crystallinity polypropylene, isotactic and syndiotactic polypropylene, ethylene-propylene ("EP") copolymers, and combinations thereof. In particular embodiments, the core layer comprises propylene homopolymer having a melt flow rate of 1.0 g/10 min. to about 10 g/10 min., preferably 1.5 g/10 min. to about 3.5 g/10 min., measured according to ASTM D-1238 at 230°C/2.16kg. In one embodiment, the polypropylene is Polypropylene 4712 from ExxonMobil Chemical Company of Baytown, Texas and comprises 96% of the thickness of the polymeric substrate.

Multilayer films having three or more layers, e.g., five layers and sometimes even seven layers, are contemplated. Five-layer films may include a core layer, two skin layers, and an intermediate layer between the core layer and each skin layer, such as disclosed in U.S. Patent Nos. 5,209,854 and 5,397,635. The skin layers may include a copolymer (i.e., a polymer comprising two or more different monomers) of propylene and another olefin such as ethylene and/or 1-butene.

The oriented polymeric film of this disclosure may be uniaxially or biaxially oriented. Orientation in the direction of extrusion is known as machine direction ("MD") orientation. Orientation perpendicular to the direction of extrusion is known as transverse direction ("TD") orientation. Orientation may be accomplished by stretching or pulling a film first in the MD followed by the TD. Orientation may be sequential or simultaneous, depending upon the desired film features. Preferred orientation ratios are commonly from between about 3 to about 6 times in the machine direction (MD) and between about 4 to about 10 times in the transverse direction (TD). During the process of biaxial orientation, a cast material is typically heated (optionally including a pre-heating stage) to its orientation temperature and subjected to MD orientation between two sets of rolls, the second set rotating at a greater speed than the first by an amount effective to obtain the desired draw ratio. Then, the monoaxially oriented sheet is oriented in the TD by heating (again optionally including pre-heating) the sheet as it is fed through an oven and subjected to transverse stretching in a tenter frame.

The biaxial orientation can also be carried out simultaneously by orienting on a line which utilizes linear motors to directly propel opposed pairs of tenter clips synchronously. The use of linear motors to directly propel tenter clips to effect simultaneous biaxial stretching is disclosed in U.S. Patent No. 4,853,602 to Hommes et al.

The biaxial orientation of the substrate, including any preheating step as well as the stretching steps, can be performed using stretch temperatures in the range of from above the glass transition temperature (Tg) of the substrate to near the crystalline melting point (Tm) of the substrate. More specifically, orientation in the MD is conducted at from about 70°C to about 130°C, more preferably from about 70°C to about 120°C. The film is typically heat set to a temperature between about 70°C and 100°C after the MD orientation. The film is then reheated and stretched in the TD. Orientation in the TD is conducted at from about 120°C to about 150°C, more preferably from about 120°C to about 140°C. The skilled artisan will understand that the orientation temperature employed in a particular situation will generally depend upon the residence time of the base sheet and the size of the rolls. Apparatus temperature higher than the Tm of the polyolefin sheet can be appropriate if the residence time is short. The skilled artisan also understands that the temperatures involved in these processes are in relation to the measured or set temperatures of the equipment rather than the temperature of the polyolefin itself, which generally cannot be directly measured.

### Adhesive-Side Skin Layer

In embodiments, where the polymeric substrate comprises a multilayer film, the polymeric substrate includes an adhesive-side skin layer adjacent one side of the core layer. The adhesive-side skin layer may comprise any suitable film-forming polymer. Generally, the composition of the adhesive-side skin layer is selected to adhere sufficiently to the underlying core/tie layer composition. Typically, when the film is coextruded the thickness of a skin layer may range from about 1% to about 18%, preferably about 1.5% to about 5%, of the total polymeric substrate thickness. In certain embodiments, the adhesive-side skin layer comprises a propylene polymer, ethylene polymer, isotactic polypropylene ("iPP"), high crystallinity polypropylene ("HCPP"), low crystallinity polypropylene, isotactic and syndiotactic polypropylene, propylene-ethylene copolymer, and mixtures thereof. In particular embodiments, the adhesive-side skin layer comprises a heat-sealable polymer composition, e.g., a propylene-ethylene random copolymer having a melt flow rate of 1.0 g/10 min. to about 10 g/10 min., preferably 5.0 g/10 min. to about 8.0 g/10 min., measured according to ASTM D-1238 at 230°C/2.16kg. The random propylene-ethylene copolymer may also have a density (according to ASTM D-1505) of 0.870 g/cm³ to about 0.930 g/cm³, preferably 0.880 g/cm³ to 0.900 g/cm³. One suitable polymer is Polypropylene 8573 HB from Total Petrochemicals U.S.A., Inc. In particular embodiments, the adhesive-side skin layer comprises Polypropylene 8573 HB and forms about 2 wt% of the thickness of the polymeric substrate.

### Print-Side Skin Layer

The print-side skin layer is formed on the side of the polymeric substrate opposite the adhesive side skin layer and may comprise any suitable film-forming polymer. Generally, the composition of the print-side skin layer is selected to adhere sufficiently to the underlying core/tie layer composition. Typically, when the film is coextruded, the thickness of a skin layer may range from about 1% to about 18%, preferably about 1.5% to about 5%, of the total polymeric substrate thickness. In certain embodiments, the print-side skin layer comprises a propylene polymer, ethylene polymer, isotactic polypropylene ("iPP"), high crystallinity polypropylene ("HCPP"), low crystallinity polypropylene, isotactic and syndiotactic polypropylene, propylene-ethylene copolymer, and mixtures thereof. In particular embodiments, the print-side skin layer comprises a heat-sealable polymer composition, e.g., a propylene-ethylene random copolymer having a melt flow rate of 1.0 g/10 min. to about 10 g/10 min., preferably 5.0 g/10 min. to about 8.0 g/10 min., measured according to ASTM D-1238 at 230°C/2.16kg. The random propylene-ethylene copolymer may also have a density (according to ASTM D-1505) of 0.870 g/cm³ to about 0.930 g/cm³, preferably 0.880 g/cm³ to 0.900 g/cm³. One suitable polymer is Polypropylene 8573 HB from Total Petrochemicals U.S.A., Inc. In particular embodiments, the print-side skin layer comprises Polypropylene 8573 HB and forms about 2 wt% of the thickness of the polymeric substrate.

When measured with an M2 Perthometer equipped with a 150 stylus from Mahr Corporation, the average surface roughness (Rₐ, output as defined in the operating manual of the Perthometer) of the print-side skin layer is ≤ 12.0 µm, preferably ≤ 10.0 µm more preferably ≤ 7.0 µm, still more preferably ≤ 5.0 µm. Surface roughness can be controlled by a number of processing parameters including temperatures used in film formation and orientation (e.g., TD oven temperatures), skin resin type and amount or type of additives in skin layer.

In particular embodiments, the print-side skin layer has a gloss value ≥ 70.0, preferably ≥ 75.0, preferably ≥ 80.0, when measured at 20° as measured by ASTM D 2457.

### Surface Treatment Process

The print-side skin layer is surface-treated under atmosphere or vacuum. The surface treatment may be conducted during or after orientation, e.g., for example, in a metallization chamber, by any method including corona, flame, plasma, or combinations thereof. Preferred, is low pressure plasma treatment and its combinations with flame or atmospheric plasma treatment.

The surface of the print-side skin layer may be treated by exposure to corona, flame, or plasma while the film is continuously passing between spaced electrodes or in close proximity with the stable flame cones. The intensity of the treatment is set to impart to a surface tension level ≥ 35 dynes/cm in accordance with ASTM D 2578-84. Known corona treatment procedures contemplated herein are, for example, any of those disclosed in U.S. Patent Nos. 3,255,099 and 4,297,187; EP Patent No. 1,125,972; and by Villermet et, Surface and Coatings Technology, 174-175, 899 (2003). Known flame treatment procedures are, for example, any of those disclosed in U.S. Patent Nos. 3,255,099; 4,297,187; 3,028,622; 3,255,034; 3,347,697; and 4,239,827.

The low pressure plasma treatment may use an evacuable reaction chamber that is capable of maintaining treatment conditions, i.e., pressure, a flow rate of gases, power voltage, formation of plasma species, a deposition rate, etc. The print-side skin layer to be treated may be placed in or passed through the evacuable chamber. The intensity of the treatment is set to impart to a surface tension level ≥ 0.035 N/m (35 dynes/cm) in accordance with ASTM D 2578-84

A premixed flame may use air or oxygen-enriched air as an oxidizer and a gaseous hydrocarbon as a fuel. Typical hydrocarbon fuels include natural gas, methane, ethane, propane, butane, ethylene, hydrogen, liquefied petroleum gas, acetylene, or blends thereof. Flames may be fuel-lean, stoichiometrically balanced, or fuel-rich.

Suitable examples of corona gases, components of a flame fuel mixture, and plasma gases comprise noble, inert, oxidizing, reducing, or reactive monomeric or oligomeric gases in various combinations and ratios, for example, such as helium (He), argon (Ar), nitrogen (N₂), oxygen (O₂), hydrogen (H₂), ethylene (C₂H₂), hydrogen peroxide (H₂O₂), water (H₂O), ammonia (NH₃), carbon dioxide (CO₂), nitrous oxide (N₂O), hydrogen sulfide (H₂S), air, silanes, siloxanes, or mixtures thereof. In one embodiment, the gas combination is a mixture of noble or inert gases with oxidizing or reducing gases in various ratios.

### Metallization

The treated surface of the print-side skin layer is metallized via the application thereto of a thin layer of metal. The treated surface may be metallized by vacuum deposition, or any other metallization technique, such as electroplating or sputtering. In one embodiment, the metal is aluminum, or any other metal capable of being vacuum deposited, electroplated, or sputtered, such as, for example, gold, zinc, copper, or silver. Typically, a metal layer is applied to an optical density (OD) of from 1.5 to 5.0 or preferably from 1.8 to 4.0, in accordance with the standard procedure of ANSI/NAPM IT2.19.

### Primer

In some circumstances it may be advantageous to apply a primer over the metal layer. Generally, any primer layer commonly used in the art, may be used and included in films according to this invention, so long as the chosen primer bonds adequately to the metal and the print-face coating described below when exposed to conditions of intended use, such as hot water. Exemplary primers may include water-based epoxies prepared and applied according to U.S. Patent Nos. 4,214,039; 4,447,494; and 4,681,803; and cationic amino-functional polymers described by McGee in U.S. Patent No. 6,596,379. Other specific examples may include amino-functional acrylics such as NeoCrylTM XK-90 or water-based urethanes like NeoRez R-610, manufactured by DSM NeoResins (Waalwijk, The Netherlands). In other embodiments, the primer composition comprises a copolymer comprising from about 65.0 wt% to about 95.0 wt% of polymer units derived from at least one of ethylene, propylene, and butylene; and from about 5 wt% to about 35 wt% of polymer units derived from at least one of acrylic acid, methacrylic acid, crotonic acid, maleic acid, and itaconic acid. Particular embodiments employ a primer composition comprising a copolymer including from about 65.0 wt% to about 95.0 wt% of units derived from ethylene and from about 5.0 wt% to about 35.0 wt% of polymer units derived from acrylic acid.

Other suitable primers for use in embodiments of the invention include an iminated acrylic, a poly(ethyleneimine), an epoxy, or a polyurethane. Where the primer composition includes a cross-linking agent, any cross-linking capable of cross-linking the ionomer to a desirable degree may be used. Particularly suitable cross-linking agents comprise a carboxyl-reactive functionality. Thus, in some embodiments, at least one of the first and second cross-linking agents comprises a carboxyl-reactive cross-linking agent the amount of cross-linking is not critical; however, in some embodiments about 5 wt% to about 35 wt% of the acid groups are cross-linked.

Primer layers should be relatively thin, with application levels yielding between about 0.05 g/m² and 1.0 g/m² of dried primer, preferably between 0.1 g/m² and 0.5 g/m², more preferably 0.15 g/m² to 0.30 g/m². In a particular embodiment, the primer comprises a copolymer including from about 65.0 wt% to about 95.0 wt% of units derived from ethylene and from about 5.0 wt% to about 35.0 wt% of polymer units derived from acrylic acid applied at a coating weight of about 0.25g/m².

### Print-Face Coating

In some embodiments, the printable topcoat layer comprises:
a) 70.0 wt% to 100.0 wt% of a cationically stabilizable amino-functional polymer having a number-average molecular weight of > 3000, which exists in the presence of water as a solution or emulsion at a pH ≤ 8, and which upon drying contains ethenically unsaturated moieties selected from the group consisting of acrylic, methacrylic, and enamine; and
b) optionally up to 30.0 wt% of an unsaturation number enhancer element selected from the group consisting of: 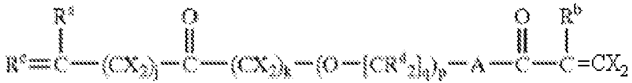 and 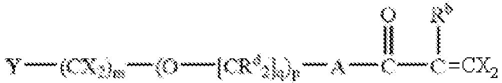 where Y is selected from the group consisting of halogen and three-membered oxirane ring, R^{a} and R^{b} are the same or different and selected from the group consisting of H and C₁ to C₆ alkyl, R^{c} is selected from the group consisting of O and CX₂, each X can be the same or different and is selected from the group consisting of H, hydroxyl, and halogen, R^{d} is selected from the group consisting of H, hydroxyl, halogen, and any organic radical containing at least one carbon atom, wherein each R^{d} can be the same or different, A is selected from the group consisting of O and NR^{d}, CR^{d} and CR^{d}₂ can each be a separate moiety or a portion of a cyclic structure, j, k, and m are integers ranging from 0 to 6, inclusive, q is an integer ranging from 1 to 6, inclusive, and p is an integer ranging from 0 to 30, inclusive.

In other embodiments, the printable topcoat layer comprises:
a) 1.0 wt% to 50.0 wt% of an amino-functional polymer; and
b) 50.0 wt% to 99.0 wt% of at least one additional polymer selected from the group consisting of nonionic polymer and cationic polymer; wherein the amino-functional polymer is soluble in hydrophilic solvent at a pH < 8.0.

Particularly, the amino-functional polymers are a condensation product of a reaction between an amino-functional polymer comprising reactive amine hydrogens with an element selected from the group consisting of halo-functional monomer, halo-functional oligomer, carbonyl-functional monomer, carbonyl-functional oligomer, epoxy-functional monomer, epoxy-functional oligomer, poly-functional acrylic monomer, poly-functional acrylic oligomer, poly-functional methacrylic monomer, and poly-functional methacrylic oligomer, said element containing or forming upon drying an ethenically unsaturated moiety selected from the group consisting of acrylic, methacrylic, and enamine.

In some embodiments, the printable topcoat layer further comprises at least one element selected from the group consisting of coating process-facilitating adjuvant, nonionic wax dispersion, cationic wax dispersion, nonionic slip additive, cationic slip additive, cationic colloidal silica, mineral filler, plastic pigment, cross-linking compound, curing catalyst, anti-static additive, and security taggant.

The print-face coating may be applied at a dry basis weight of about 0.05 g/m² to 1.0 g/m², preferably between 0.1 g/m² and 0.4 g/m², more preferably 0.15 g/m² to 0.30 g/m². In a particular embodiment, the print-face coating is applied to provide a dry basis weight of about 0.20 g/m² to 0.25 g/m².

Any of the film structures described above may be incorporated in to a pressure-sensitive label structure. A pressure sensitive label is formed when the film is combined with a release liner. The release liner structure is typically a polymeric film that is removably secured to the adhesive-side skin layer of the polymeric substrate by an adhesive composition. The composition of the adhesive is not critical provided that it allows for the film structure to be removed from the release liner.

### Additives

One or more layers of the film may further contain one or more additives. Examples of useful additives include, but are not limited to, opacifying agents, pigments, colorants, cavitating agents, slip agents, antioxidants, anti-fog agents, anti-static agents, antiblock agents, moisture barrier additives, gas barrier additives, hydrocarbon resins, hydrocarbon waxes, fillers such as calcium carbonate, diatomaceous earth and carbon black, and combinations thereof. Such additives may be used in effective amounts, which vary depending upon the property required.

Examples of suitable opacifying agents, pigments, or colorants include, but are not limited to, iron oxide, carbon black, aluminum, titanium dioxide, calcium carbonate, poly terephthalate, talc, beta nucleating agents, and combinations thereof.

Cavitating agents or void-initiating particles may be added to one or more layers of the film to create an opaque film. Preferably, the cavitating agents or void-initiating particles are added to the core layer. Generally, the cavitating or void-initiating additive includes any suitable organic or inorganic material that is incompatible with the polymer material(s) contained in the layer(s) to which the cavitating or void-initiating additive is added, at the temperature of biaxial orientation. Examples of suitable void-initiating particles include, but are not limited to, polybutylene terephthalate ("PBT"), nylon, cyclic-olefin copolymers, solid or hollow pre-formed glass spheres, metal beads or spheres, ceramic spheres, calcium carbonate, talc, chalk, or combinations thereof. The average diameter of the void-initiating particles typically ranges from about 0.1 µm to 10 µm. The particles may be of any desired shape, or preferably they are substantially spherical in shape. Preferably, the cavitating agents or void-initiating particles are present in the layer at less than 30 wt%, or less than 20 wt%, or most preferably in the range of 2 wt% to 10 wt%, based on the total weight of the layer. Alternatively, one or more layers of the film may be cavitated by beta nucleation, which includes creating beta-form crystals of polypropylene and converting at least some of the beta-crystals to alpha-form crystals thus leaving small voids remaining after the conversion.

Slip agents that may be used include, but are not limited to, higher aliphatic acid amides, higher aliphatic acid esters, waxes, silicone oils, and metal soaps. Such slip agents may be used in amounts in the range of 0.1 wt% to 2 wt% based on the total weight of the layer to which it is added. An example of a fatty acid slip additive that may be used is erucamide. In one embodiment, a conventional polydialkylsiloxane, such as silicone oil or silicone gum, additive having a viscosity of 10,000 to 2,000,000 cSt is used.

Non-migratory slip agents may be used in one or more of the outer surface layers of the films. Non-migratory means that these agents do not generally change location throughout the layers of the film in the manner of migratory slip agents. A preferred non-migratory slip agent is polymethyl methacrylate ("PMMA"). The non-migratory slip agent may have a mean particle size in the range of 0.5 µm to 15 µm, or 1 µm to 10 µm, or 1 µm to 5 µm, or 2 µm to 4 µm, depending on the layer's thickness and desired slip properties. Alternatively, the size of the particles in the non-migratory slip agent, such as PMMA, may be greater than 10% of the thickness of the surface layer containing the slip agent, or greater than 20% of the layer's thickness, or greater than 50% of the layer's thickness, or in some embodiments greater than 100% of the layer's thickness. Generally spherical, particulate non-migratory slip agents are contemplated. A commercially available example of a PMMA resin is EPOSTAR^{™} which is available from Nippon Shokubai Co., Ltd. of Japan.

An example of a suitable antioxidant includes phenolic anti-oxidants, such as IRGANOX^{®} 1010, which is commercially available from Ciba-Geigy Company of Switzerland. Such an antioxidant may be used in an amount ranging from 0.1 wt% to 2 wt%, based on the total weight of the layer to which it is added.

Anti-static agents that may be used include alkali metal sulfonates, polyether-modified polydiorganosiloxanes, polyalkylphenylsiloxanes, tertiary amines, glycerol mono-stearate, blends of glycerol mono-stearate and tertiary amines, and combinations thereof. Such anti-static agents may be used in amounts in the range of about 0.05 wt% to 3 wt%, based on the total weight of the layer to which the anti-static is added. An example of a suitable anti-static agent is ARMOSTAT^{™} 475, commercially available from Akzo Nobel.

Useful antiblock additives include, but are not limited to, silica-based products such as inorganic particulates such as silicon dioxide, calcium carbonate, magnesium silicate, aluminum silicate, calcium phosphate, and the like. Other useful antiblock additives include polysiloxanes and non-meltable crosslinked silicone resin powder, such as TOSPEARL^{™}, which is commercially available from Toshiba Silicone Co., Ltd. Anti-blocking agents may be effective in amounts up to about 30,000 ppm of the layer to which it is added.

Examples of useful fillers include, but are not limited to, finely divided inorganic solid materials such as silica, fumed silica, diatomaceous earth, calcium carbonate, calcium silicate, aluminum silicate, kaolin, talc, bentonite, clay, and pulp.

Suitable moisture and gas barrier additives may include effective amounts of low-molecular weight resins, hydrocarbon resins, particularly petroleum resins, styrene resins, cyclopentadiene resins, and terpene resins. The film may also contain a hydrocarbon wax in one or more layers. The hydrocarbon wax may be either a mineral wax or a synthetic wax. Hydrocarbon waxes may include paraffin waxes and microcrystalline waxes. Typically, paraffin waxes having a broad molecular weight distribution are preferred as they generally provide better barrier properties than paraffin waxes with a narrow molecular weight distribution.

Optionally, one or more of the outer surface layers may be compounded with a wax or coated with a wax-containing coating, for lubricity, in amounts in the range of 2 wt% to 15 wt% based on the total weight of the layer.

### Methods of Making Films

Embodiments for the invention also provide a method of making a pressure-sensitive label structure according to claim 1. The method comprises a) providing an oriented polymeric substrate having a print side and an adhesive side, wherein a print-side skin layer of the substrate has a surface roughness ≤ 12.0 µm; b) forming a metal layer in surface contact with the print side of the polymeric substrate; c) providing the primer composition in surface contact with the metal layer; and d) providing a printable topcoat layer in surface contact with the primer composition, the method further comprising providing a removable release liner structure on the adhesive side of the polymeric substrate.

One method of carrying out such a method involves cast extrusion of a sheet of polymer (typically 500 µm to 650 µm thick) followed by orientation, either in the machine direction, the transverse direction, or both at elevated temperature on a stretching apparatus. Preferably, the stretching profile provides the desired surface roughness in addition to even stretching without unacceptable stretch bands, breakage, or sagging. A typical commercial tenter frame process to make biaxially oriented polypropylene film, operating at 250 m/min. line speed and with TD stretch ratio 850% (i.e., 1 m wide film stretched to 8.5 m), has a TD-stretch strain rate of about 15,000% per minute.

### EXAMPLES

### Comparative Example 1

In this comparative example, a metallized, coated film including a three-layer coextruded, oriented polymeric substrate is prepared. The substrate comprises a polypropylene core layer of comprising Polypropylene 4712 (including a small amount of polymer from the film reclaim stream). The core layer comprises 96% of the total film thickness. The adhesive side layer comprises Polypropylene 8573 HB, a propylene-ethylene copolymer having a melt-flow-rate of 6.8 g/10 min (according to ASTM D-1238 at 230°C/2.16 kg), a density of 0.895 g/cm³, and a reported melting point of 275°C according to DSC and available from Total Petrochemical USA, Inc. The print-side skin layer also comprises Polypropylene 8573 HB. The print-side skin has a surface roughness in the transverse direction of 26.6 µm and 34.4 µm in the machine direction. An aluminum layer is formed over the print-side skin layer at an optical density of 2.0. A primer coating comprising 100 parts of an ethylene acrylic acid copolymer (MichemPrime^{™} 4983.15 available from Michelman) is blended with 10 parts ammonium zirconium carbonate (AZCote^{™} H5800M available from Akzonobel), 1.16 parts Tergitol^{™} 15-S-9 (available from Union Carbide), 3.9 parts hexyl cellosolve (available from Union Carbide), and sufficient ammonium hydroxide to make the pH > 9.5 is applied over the aluminum layer at a coating weight of 0.23 g/m². A print side coating comprising 100 parts R1117^{™} XL (available from Owensboro Specialty Polymers, LLC), 5 parts acetoacetoxyethyl methacrylate (available from Sigma-Aldrich), 3.1 parts Tergitol^{™} 15-S-9, and 3.8 parts hexyl cellosolve is applied over the primer at a coating weight of 0.23 g/m². The properties of the resulting film are reported in Table 1. Using the film as a mirror, individual squares in the center of reflected image of a grid of 0.25 inch squares could not be visually discerned.

### Comparative Example 2

Comparative Example 1 was substantially repeated except that the print-side skin layer has a surface roughness in the transverse direction of 17.7 µm and 20.4 µm in the machine direction. Like Comparative Example 1, individual squares in the reflected image of a grid of 0.25 inch squares could not be visually discerned.

### Comparative Example 3

Comparative Example 1 was substantially repeated except that the print-side skin layer has a surface roughness in the transverse direction of 20.5 µm and 24.6 µm in the machine direction. Like Comparative Example 1, individual squares in the reflected image of a grid of 0.25 inch squares could not be visually discerned.

### Comparative Example 4

Comparative Example 1 was substantially repeated except that the print-side skin layer has a surface roughness in the transverse direction of 14.9 µm and 14.8 µm in the machine direction. Like Comparative Example 1, individual squares in the reflected image of a grid of 0.25 inch squares could not be visually discerned.

### Comparative Example 5

Comparative Example 1 was substantially repeated except that the print-side skin layer has a surface roughness in the transverse direction of 14.1 µm and 13.9 µm in the machine direction. Like Comparative Example 1, individual squares in the reflected image of a grid of 0.25 inch squares could not be visually discerned.

### Example 1, not being part of the claimed invention

Comparative Example 1 was substantially repeated except that the print-side skin layer has a surface roughness in the transverse direction of 8.0 µm and 8.2 µm in the machine direction. Individual squares in the reflected image of a grid of 0.25 inch squares could clearly be visually discerned.

### Example 2, not being part of the claimed invention

Comparative Example 1 was substantially repeated except that the print-side skin layer has a surface roughness in the transverse direction of 10.5 µm and 9.8 µm in the machine direction. Like Comparative Example 1, individual squares in the reflected image of a grid of 0.25 inch squares could clearly be visually discerned.

**Table 1: Film Properties**

| | **CE1** | **CE2** | **CE3** | **CE4** | **CE5** | **Inv. Ex. 1** | **Inv. Ex. 2** |
|---|---|---|---|---|---|---|---|
| **20° Gloss** | 8.8 | 19 | 17.9 | 24.4 | 33.8 | 81.1 | 75.5 |
| **45° Gloss** | 46.6 | 37.0 | 60.4 | 69.3 | 73.8 | 55.9 | 82.8 |
| **60° Gloss** | 44.2 | 56.2 | 66.7 | 78.8 | 91.2 | 120.3 | 119.1 |
| **85° Gloss** | 48.5 | 64.2 | 74.8 | 77.8 | 85.5 | 98.3 | 95.0 |
| **Haze** | 12.5 | 9.53 | 7.98 | 4.47 | 3.19 | 1.66 | 1.6 |
| **Ra (TD)** | 26.6 | 17.7 | 20.5 | 14.9 | 14.1 | 8.0 | 10.5 |
| **Ra (MD)** | 34.4 | 20.4 | 20.6 | 14.8 | 13.9 | 8.2 | 9.9 |

The data in Table 1 shows that the f brilliance or reflectivity of the underlying metal layer improves as the surface roughness of the print side-skin layer of the substrate is reduced, with the more desirable appearance being observed for Inventive Examples 1 and 2 when one or both of the TD and MD surface roughness values are below 12 µm. Inventive Examples 1 and 2 also have a gloss value at 20° significantly higher than that of the comparative examples. This may be an additional or alternative indicator of improved brilliance in the metal layer.

The foregoing examples have been provided merely for the purpose of explanation and are in no way to be construed as limiting of this disclosure. While the invention has been described with respect to a limited number of embodiments, the specific features of one embodiment should not be attributed to other embodiments of the invention. No single embodiment is representative of all aspects of the invention. Moreover, variations and modifications therefrom exist. Various additives may also be used to further enhance one or more properties. In other embodiments, the composition consists essentially of, or consists of, the enumerated components described herein. In some embodiments, the composition is substantially free of any additive not specifically enumerated herein. The appended claims intend to cover all such variations and modifications as falling within the scope of the invention.

## Claims

1. A pressure-sensitive label structure comprising:
a) an oriented polymeric substrate having a print side and an adhesive side, wherein a print-side skin layer of the substrate has a surface roughness determined as disclosed in the description ≦ 12.0 µm;
b) a metal layer in surface contact with the print side of the polymeric substrate;
c) a primer composition in surface contact with the metal layer;
d) a printable topcoat layer in surface contact with the primer composition; and
e) a release liner structure removably secured to the adhesive side of the polymeric substrate by an adhesive composition.

2. The pressure-sensitive label structure of claim 1, wherein the primer composition comprises a copolymer comprising from 65 wt % to 95 wt % of polymer units derived from at least one of ethylene, propylene, and butylene; and from 5 wt % to 35 wt % of polymer units derived from at least one of acrylic acid, methacrylic acid, crotonic acid, maleic acid, and itaconic acid.

3. The pressure-sensitive label structure of claim 2, wherein the primer composition comprises a copolymer comprising from 65 wt % to 95 wt % of units derived from ethylene and from 5 wt % to 35 wt % of polymer units derived from acrylic acid.

4. The pressure-sensitive label structure of claim 1, wherein the printable topcoat layer further comprises at least one element selected from the group consisting of coating process-facilitating adjuvant, nonionic wax dispersion, cationic wax dispersion, nonionic slip additive, cationic slip additive, cationic colloidal silica, mineral filler, plastic pigment, cross-linking compound, curing catalyst, anti-static additive, and security taggant.

5. The pressure-sensitive label structure of claim 1, wherein the printable topcoat layer comprises:
a) 1.0 wt % to 50.0 wt % of an amino-functional polymer; and
b) 50.0 wt % to 99.0 wt % of at least one additional polymer selected from the group consisting of nonionic polymer and cationic polymer; wherein the amino-functional polymer is soluble in hydrophilic solvent at a pH<8.0.

6. The pressure-sensitive label structure of claim 5, wherein the amino-functional polymer is a condensation product of a reaction between an amino-functional polymer comprising reactive amine hydrogens with an element selected from the group consisting of halo-functional monomer, halo-functional oligomer, carbonyl-functional monomer, carbonyl-functional oligomer, epoxy-functional monomer, epoxy-functional oligomer, poly-functional acrylic monomer, poly-functional acrylic oligomer, poly-functional methacrylic monomer, and poly-functional methacrylic oligomer, said element containing or forming upon drying an ethenically unsaturated moiety selected from the group consisting of acrylic, methacrylic, and enamine.

7. The pressure-sensitive label structure of claim 1, further comprising an ink-printed image on the topcoat layer.

8. A method of making a pressure-sensitive label structure according to claim 1, the method comprising:
a) providing an oriented polymeric substrate having a print side and an adhesive side, wherein a print-side skin layer of the substrate has a surface roughness determined as disclosed in the description, ≦ 12.0 µm;
b) forming a metal layer in surface contact with the print side of the polymeric substrate;
c) providing a primer composition in surface contact with the metal layer; and
d) providing a printable topcoat layer in surface contact with the primer composition,
the method further comprising a removable release liner structure on the adhesive side of the polymeric substrate.

9. The method of claim 8, wherein the primer composition comprises a copolymer comprising from 65.0 wt % to 95.0 wt % of polymer units derived from at least one of ethylene, propylene, and butylene; and from 5.0 wt % to 35.0 wt % of polymer units derived from at least one of acrylic acid, methacrylic acid, crotonic acid, maleic acid, and itaconic acid.

10. The method of claim 8, wherein the primer composition comprises a copolymer comprising from 65 wt % to 95 wt % of units derived from ethylene and from 5.0 wt % to 35.0 wt % of polymer units derived from acrylic acid.

11. The method of claim 8, wherein the printable topcoat layer comprises:
a) 1.0 wt % to 50.0 wt % of an amino-functional polymer; and
b) 50.0 wt % to 99.0 wt % of at least one additional polymer selected from the group consisting of nonionic polymer and cationic polymer; wherein the amino-functional polymer is soluble in hydrophilic solvent at a pH<8.0.

12. The method of claim 8, wherein the printable topcoat layer further comprises providing at least one element selected from the group consisting of coating process-facilitating adjuvant, nonionic wax dispersion, cationic wax dispersion, nonionic slip additive, cationic slip additive, cationic colloidal silica, mineral filler, plastic pigment, cross-linking compound, curing catalyst, anti-static additive, and security taggant.

## Patentansprüche

1. Haftklebeetikettkonstruktion, umfassend:
a) ein orientiertes Polymersubstrat mit einer Druckseite und einer Klebstoffseite, wobei eine Druckseiten-Deckschicht des Substrats eine gemäß der Offenbarung in der Beschreibung bestimmte Oberflächenrauigkeit Ra ≤ 12,0 µm aufweist;
b) eine Metallschicht in Oberflächenkontakt mit der Druckseite des Polymersubstrats;
c) eine Grundierungszusammensetzung in Oberflächenkontakt mit der Metallschicht;
d) eine bedruckbare Oberschicht in Oberflächenkontakt mit der Grundierungszusammensetzung und
e) eine Abdeckfolienkonstruktion, die mit einer Klebstoffzusammensetzung entfernbar auf der Klebstoffseite des Polymersubstrats befestigt ist.

2. Haftklebeetikettkonstruktion nach Anspruch 1, wobei die Grundierungszusammensetzung ein Copolymer umfasst, welches 65 Gew.-% bis 95 Gew.-% Polymereinheiten, die sich von Ethylen, Propylen und/oder Butylen ableiten, und 5 Gew.-% bis 35 Gew.-% Polymereinheiten, die sich von Acrylsäure, Methacrylsäure, Crotonsäure, Maleinsäure und/oder Itaconsäure ableiten, umfasst.

3. Haftklebeetikettkonstruktion nach Anspruch 2, wobei die Grundierungszusammensetzung ein Copolymer umfasst, welches 65 Gew.-% bis 95 Gew.-% Einheiten, die sich von Ethylen ableiten, und 5 Gew.-% bis 35 Gew.-% Polymereinheiten, die sich von Acrylsäure ableiten, umfasst.

4. Haftklebeetikettkonstruktion nach Anspruch 1, wobei die bedruckbare Oberschicht ferner mindestens ein Element aus der Gruppe bestehend aus den Beschichtungsprozess erleichterndem Adjuvans, nichtionischer Wachsdispersion, kationischer Wachsdispersion, nichtionischem Slipadditiv, kationischem Slipadditiv, kationischem kolloidalem Siliciumdioxid, mineralischem Füllstoff, Kunststoffpigment, vernetzender Verbindung, Härtungskatalysator, Antistatikadditiv und Sicherheitsmarker umfasst.

5. Haftklebeetikettkonstruktion nach Anspruch 1, wobei die bedruckbare Oberschicht
a) 1,0 Gew.-% bis 50,0 Gew.-% eines aminofunktionellen Polymers und
b) 50,0 Gew.-% bis 99,0 Gew.-% mindestens eines zusätzlichen Polymers aus der Gruppe bestehend aus nichtionischem Polymer und kationischen Polymer; wobei das aminofunktionelle Polymer bei einem pH-Wert <8,0 in hydrophilem Lösungsmittel löslich ist,
umfasst.

6. Haftklebeetikettkonstruktion nach Anspruch 5, wobei es sich bei dem aminofunktionellen Polymer um ein Kondensationsprodukt einer Reaktion zwischen einem aminofunktionellen Polymer mit reaktiven Amin-Wasserstoffatomen mit einem Element aus der Gruppe bestehend aus halogenfunktionellem Monomer, halogenfunktionellem Oligomer, carbonylfunktionellem Monomer, carbonylfunktionellem Oligomer, epoxidfunktionellem Monomer, epoxidfunktionellem Oligomer, polyfunktionellem Acrylmonomer, polyfunktionellem Acryloligomer, polyfunktionellem Methacrylmonomer und polyfunktionellem Methacryloligomer handelt, wobei das Element beim Trocknen eine ethylenisch ungesättigte Gruppierung aus der Gruppe bestehend aus Acryl, Methacryl und Enamin enthält oder bildet.

7. Haftklebeetikettkonstruktion nach Anspruch 1, ferner umfassend ein mit Tinte auf die Oberschicht aufgedrucktes Bild.

8. Verfahren zur Herstellung einer Haftklebeetikettkonstruktion gemäß Anspruch 1, wobei das Verfahren Folgendes umfasst:
a) Bereitstellen eines orientierten Polymersubstrats mit einer Druckseite und einer Klebstoffseite, wobei eine Druckseiten-Deckschicht des Substrats eine gemäß der Offenbarung in der Beschreibung bestimmte Oberflächenrauigkeit ≤ 12,0 µm aufweist;
b) Bilden einer Metallschicht in Oberflächenkontakt mit der Druckseite des Polymersubstrats;
c) Bereitstellen einer Grundierungszusammensetzung in Oberflächenkontakt mit der Metallschicht und
d) Bereitstellen einer bedruckbaren Oberschicht in Oberflächenkontakt mit der Grundierungszusammensetzung,
das Verfahren ferner umfassend eine entfernbare Abdeckfolienkonstruktion auf der Klebstoffseite des Polymersubstrats.

9. Verfahren nach Anspruch 8, wobei die Grundierungszusammensetzung ein Copolymer umfasst, welches 65,0 Gew.-% bis 95,0 Gew.-% Polymereinheiten, die sich von Ethylen, Propylen und/oder Butylen ableiten, und 5,0 Gew.-% bis 35,0 Gew.-% Polymereinheiten, die sich von Acrylsäure, Methacrylsäure, Crotonsäure, Maleinsäure und/oder Itaconsäure ableiten, umfasst.

10. Verfahren nach Anspruch 8, wobei die Grundierungszusammensetzung ein Copolymer umfasst, welches 65 Gew.-% bis 95 Gew.-% Einheiten, die sich von Ethylen ableiten, und 5,0 Gew.-% bis 35 Gew.-% Polymereinheiten, die sich von Acrylsäure ableiten, umfasst.

11. Verfahren nach Anspruch 8, wobei die bedruckbare Oberschicht
a) 1,0 Gew.-% bis 50,0 Gew.-% eines aminofunktionellen Polymers und
b) 50,0 Gew.-% bis 99,0 Gew.-% mindestens eines zusätzlichen Polymers aus der Gruppe bestehend aus nichtionischem Polymer und kationischem Polymer; wobei das aminofunktionelle Polymer bei einem pH-Wert < 8,0 in hydrophilem Lösungsmittel löslich ist,
umfasst.

12. Verfahren nach Anspruch 8, wobei die bedruckbare Oberschicht ferner mindestens ein Element aus der Gruppe bestehend aus den Beschichtungsprozess erleichterndem Adjuvans, nichtionischer Wachsdispersion, kationischer Wachsdispersion, nichtionischem Slipadditiv, kationischem Slipadditiv, kationischem kolloidalem Siliciumdioxid, mineralischem Füllstoff, Kunststoffpigment, vernetzender Verbindung, Härtungskatalysator, Antistatikadditiv und Sicherheitsmarker umfasst.

## Revendications

1. Structure d'étiquette sensible à la pression comprenant :
a) un substrat polymérique orienté possédant un côté d'impression et un côté d'adhérence, une couche de peau côté impression du substrat possédant une rugosité de surface déterminée comme divulgué dans la description ≤ 12,0 µm;
b) une couche métallique en contact superficiel avec le côté d'impression du substrat polymérique;
c) une composition d'apprêt en contact superficiel avec la couche métallique;
d) une couche de finition imprimable en contact superficiel avec la composition d'apprêt; et
e) une structure de pellicule détachable fixée de manière amovible au côté d'adhérence du substrat polymérique par une composition d'adhérence.

2. Structure d'étiquette sensible à la pression selon la revendication 1, la composition d'apprêt comprenant un copolymère comprenant de 65 % en poids à 95 % en poids de motifs de polymère issus d'au moins un parmi l'éthylène, le propylène, et le butylène ; et de 5 % en poids à 35 % en poids de motifs de polymères issus d'au moins un parmi l'acide acrylique, l'acide méthacrylique, l'acide crotonique, l'acide maléique, et l'acide itaconique.

3. Structure d'étiquette sensible à la pression selon la revendication 2, la composition d'apprêt comprenant un copolymère comprenant de 65 % en poids à 95 % poids de motifs issus de l'éthylène et de 5 % en poids à 35 % en poids de motifs de polymère issus de l'acide acrylique.

4. Structure d'étiquette sensible à la pression selon la revendication 1, la couche de finition imprimable comprenant en outre au moins un élément choisi dans le groupe constitué par un adjuvant facilitant le processus de revêtement, une dispersion de cire non ionique, une dispersion de cire cationique, un additif de glissement non ionique, un additif de glissement cationique, une silice colloïdale cationique, une charge minérale, un pigment plastique, un composé de réticulation, un catalyseur de durcissement, un additif antistatique, et un traceur de sécurité.

5. Structure d'étiquette sensible à la pression selon la revendication 1, la couche de finition imprimable comprenant :
a) 1,0 % en poids à 50,0 % en poids d'un polymère aminofonctionnel; et
b) 50,0 % en poids à 99,0 % en poids d'au moins un polymère supplémentaire choisi dans le groupe constitué par un polymère non ionique et un polymère cationique; le polymère aminofonctionnel étant soluble dans un solvant hydrophile à un pH < 8,0.

6. Structure d'étiquette sensible à la pression selon la revendication 5, le polymère aminofonctionnel étant un produit de condensation d'une réaction entre un polymère aminofonctionnel comprenant des hydrogènes d'amine réactifs avec un élément choisi dans le groupe constitué par un monomère halogénofonctionnel, un oligomère halogénofonctionnel, un monomère carbonyle-fonctionnel, un oligomère carbonyle-fonctionnel, un monomère époxy-fonctionnel, un oligomère époxy-fonctionnel, un monomère acrylique polyfonctionnel, un oligomère acrylique polyfonctionnel, un monomère méthacrylique polyfonctionnel, et un oligomère méthacrylique polyfonctionnel, ledit élément contenant ou formant après séchage un fragment éthyléniquement insaturé choisi dans le groupe constitué par acrylique, méthacrylique, et énamine.

7. Structure d'étiquette sensible à la pression selon la revendication 1, comprenant en outre une image imprimée à l'encre sur la couche de finition.

8. Procédé de fabrication d'une structure d'étiquette selon la revendication 1, le procédé comprenant:
a) la mise à disposition d'un substrat polymérique orienté possédant un côté d'impression et un côté d'adhérence, une couche de peau côté impression du substrat possédant une rugosité de surface déterminée comme divulgué dans la description, ≤ 12,0 µm;
b) la formation d'une couche métallique en contact superficiel avec le côté d'impression du substrat polymérique;
c) la mise à disposition d'une composition d'apprêt en contact superficiel avec la couche métallique; et
d) la mise à disposition d'une couche de finition imprimable en contact superficiel avec la composition d'apprêt,
le procédé comprenant en outre une structure de pellicule détachable amovible sur le côté d'adhérence du substrat polymérique.

9. Procédé selon la revendication 8, la composition d'apprêt comprenant un copolymère comprenant de 65,0 % en poids à 95,0 % en poids de motifs de polymère issus d'au moins un parmi l'éthylène, le propylène, et le butylène ; et de 5,0 % en poids à 35,0 % en poids de motifs de polymère issus d'au moins un parmi l'acide acrylique, l'acide méthacrylique, l'acide crotonique, l'acide maléique, et l'acide itaconique.

10. Procédé selon la revendication 8, la composition d'apprêt comprenant un copolymère comprenant de 65 % en poids à 95 % en poids de motifs issus de l'éthylène et de 5,0 % en poids à 35,0 % en poids de motifs de polymère issus de l'acide acrylique.

11. Procédé selon la revendication 8, la couche de finition imprimable comprenant :
a) 1,0 % en poids à 50,0 % en poids d'un polymère aminofonctionnel ; et
b) 50,0 % en poids à 99,0 % en poids d'au moins un polymère supplémentaire choisi dans le groupe constitué par un polymère non ionique et un polymère cationique ; le polymère aminofonctionnel étant soluble dans un solvant hydrophile à un pH < 8,0.

12. Procédé selon la revendication 8, la couche de finition imprimable comprenant en outre la mise à disposition d'au moins un élément choisi dans le groupe constitué par un adjuvant facilitant le processus de revêtement, une dispersion de cire non ionique, une dispersion de cire cationique, un additif de glissement non ionique, un additif de glissement cationique, une silice colloïdale cationique, une charge minérale, un pigment plastique, un composé de réticulation, un catalyseur de durcissement, un additif antistatique, et un traceur de sécurité.
